# EUROPEAN PATENT APPLICATION

(11) **EP 0 577 375 A1**
(43) Date of publication of application: **05.01.1994**
(21) Application number: 93305048.6
(22) Date of filing: 28.06.1993
(51) Int. Cl.: C09K 3/14, B24D 3/06, C04B 35/58

(54) **Abrasive compact**

(30) Priority: 29.06.1992 ZA 924814
(71) Applicant: DE BEERS INDUSTRIAL DIAMOND DIVISION (PROPRIETARY) LIMITED, Johannesburg, Transvaal (ZA)
(72) Inventor: Chapman, Raymond Albert, Johannesburg, Transvaal (ZA)
(74) Representative: Jones, Alan John

(57) **Abstract**

A diamond or cubic boron nitride compact is produced by subjecting a mass of coated diamond or cubic boron nitride particles to conditions of temperature and pressure at which the abrasive particle is crystallographically stable. This causes the coatings to solid sinter and bond the abrasive particles. The coating for the abrasive particles is a refractory oxide, nitride or carbide.

## Description

### BACKGROUND OF THE INVENTION

This invention relates to abrasive compacts.

Abrasive compacts are well known in the art and consist essentially of a mass of abrasive particles present in an amount of at least 50 percent, preferably 80 to 90 percent, by volume of the compact bonded into a hard conglomerate. Compacts are polycrystalline masses and can replace single large crystals in many applications. The abrasive particles will be diamond or cubic boron nitride.

Diamond compacts will typically contain a second phase uniformly distributed through the diamond mass. The second phase may contain a dominant amount of a catalyst/solvent for diamond synthesis such as cobalt, nickel or iron. Diamond compacts having second phases of this nature will generally not have thermal stability above 700°C.

Diamond abrasive compacts may be used alone or as composite compacts in which event they are backed with a cemented carbide substrate. Composite diamond abrasive compacts wherein the second phase contains a diamond catalyst/solvent are widely used in industry.

Examples of composite diamond abrasive compacts are described in United States Patent Specification No. 3,745,623 and British Patent Specification No. 1,489,130.

Diamond abrasive compacts of the type described above are thermally sensitive above a temperature of about 700°C. There are, however, described in the literature and in commercial use several diamond abrasive compacts which are thermally stable above 700°C. Examples of such compacts are described in United States Patents Nos. 4,244,380 and 4,534,773 and British Patent No. 2,158,086.

United States Patents 5,011,514 and 5,030,596 describe sintered abrasive compacts obtained by coating a surface of diamond particles with a refractory metal and then subjecting the coated particles to conditions of elevated temperature and pressure suitable to produce an abrasive compact. The abrasive compacts thus produced are said to have good thermal stability.

Examples of cubic boron nitride compacts are described in United States Patents Nos. 3,743,489 and 4,666,466.

### SUMMARY OF THE INVENTION

According to the present invention, a method of producing an abrasive compact includes the steps of providing a mass of ultra-hard abrasive particles each of which has a coating of a refractory material selected from oxides, nitrides and carbides deposited thereon, and subjecting the mass of coated abrasive particles to conditions of temperature and pressure at which the abrasive particle is crystallographically stable to cause the coatings to solid sinter and bond the abrasive particles.

### DESCRIPTION OF EMBODIMENTS

Essential to the invention is the provision of a refractory coating on the abrasive particles prior to compact manufacture. Further, the conditions of compact manufacture are such that the abrasive particle is crystallographically stable and solid sintering results, i.e. the refractory coatings sinter, bonding the particles together. The coating around each particle remains essentially intact. The refractory coating provides a protection for the abrasive particles against chemical attack and, depending on the nature of the refractory material and the ultra-hard abrasive particle, can result in a thermally stable abrasive compact being produced. For example, nitride or carbide coated diamond particles can be used to produce an abrasive compact which is thermally stable at temperatures of the order of 1200°C in a vacuum or a non-oxidising atmosphere.

The ultra-hard abrasive particles, i.e. in their uncoated state, will have a hardness at least that of cubic boron nitride. The preferred ultra-hard abrasive particles are diamond and cubic boron nitride.

Although relatively large abrasive particles can be used, the abrasive particles would generally not exceed 150 microns in size. Preferably, the particles have a size in the range 10 to 60 microns.

The refractory material will, in the case of diamond, typically be a carbide or a nitride. Examples of suitable carbides are the carbides of silicon, zirconium, hafnium, tantalum, vanadium, titanium, chromium, niobium and tungsten. Examples of suitable nitrides are the nitrides of aluminium, silicon, zirconium, hafnium, tantalum, vanadium, titanium and niobium.

In the case of cubic boron nitride, the refractory material will typically be a nitride. Examples of suitable nitrides are the nitrides of aluminium, silicon, zirconium, hafnium, tantalum, vanadium, titanium and niobium.

It is preferred that the refractory coating on the abrasive particles is in an amorphous state, or in an essentially amorphous state, i.e. it has a very small crystalline size. Such refractory coatings facilitate sintering, and hence compact formation.

The coating for the abrasive particles may consist of a single layer or multiple layers. When there are multiple layers, each layer may consist of a different refractory material of the type defined above. The inner layer adjacent the abrasive particle preferably has a coefficient of thermal expansion closest to that of the abrasive particle. The coefficients of thermal expansion of the remaining layer or layers will be progressively further from that of the abrasive particle the further the layer is from the abrasive particle. By way of example, for diamond, such a coating may consist of an inner layer of a carbide, for example titanium carbide, and an outer layer of a nitride, for example titanium nitride. The coating may also include an intermediate reaction zone of carbonitride, for example titanium carbonitride.

The refractory material coating will typically be no more than 10 microns thick, and preferably 5 to 10 microns thick. These coatings may be applied to the abrasive particles using known techniques, such as chemical vapour deposition, physical vapour deposition, sputter coating and reactive sputter coating (see for example, Kirk-Othmer Encyclopedia of Chemical Technology, 3rd Edition, vol. 20 pp 43-48).

The refractory coatings solid sinter producing an effective bond for the abrasive particles resulting in abrasive compact formation. Additional bonding aids or materials need not be used and preferably are not used. In other words, the only bonding medium is the solid sintered coatings. When it is desired to bond the abrasive compact to a substrate such as a cemented carbide substrate, an additional bonding material may be allowed to infiltrate the diamond mass. For example, if the abrasive compact is to be bonded to a cemented carbide substrate, binder metals such as cobalt, iron or nickel from the carbide may infiltrate the mass of coated abrasive particles during compact formation. The additional binder material which so infiltrates, will preferably not react with the refractory coating on the abrasive particles.

The elevated temperature and pressure conditions which are used are such that the abrasive particle selected is crystallographically stable. Such conditions are well known for ultra-hard abrasive particles such as diamond and cubic boron nitride. Typically, for these particles, the temperature will be in the range 1300 to 1700°C and the pressure will be in the range 40 to 70 kilobars. These elevated temperature and pressure conditions will generally be maintained for a period of less than 30 minutes, typically 5 to 20 minutes.

The refractory-coated abrasive particles may have an inner layer of a refractory metal. Such refractory metal, during compact formation, may react with the abrasive particle and the refractory coating creating an intermediate or transition layer.

The invention is illustrated by the following examples.

### EXAMPLE 1

Diamond powder, 20 to 40 microns in size, was placed in a reactor which was raised to 1000°C. The particles were fluidised using a flow of hydrogen at low pressure. A mixture of trichlorosilane and methane was introduced into the gas flow. After a period of 4 hours, the flow of trichlorosilane and methane was stopped and the furnace cooled down. Upon visual examination, the individual particles of the diamond powder were observed to have a green-black coating, which was identified as silicon carbide by X-ray diffraction. The coated diamond powder was placed in a tantalum container which was placed in the reaction zone of a conventional high temperature/high pressure apparatus. The contents of the tantalum container were subjected to a temperature of 1400°C and a pressure of 50 kilobars. These conditions were maintained for a period of 10 minutes. Recovered from the tantalum container was a diamond abrasive compact consisting of a mass of discrete diamond particles bonded together by means of a sintered silicon carbide matrix or second phase. An examination of the sintered silicon carbide second phase indicated that solid sintering had occurred.

### EXAMPLE 2

Cubic boron nitride powder, 20 to 40 microns in size, was placed in a reactor and the temperature raised to 750°C. The cubic boron nitride powder was fluidised using a flow of argon at low pressure. A mixture of aluminium chloride vapour and ammonia was introduced into the gas flow. After a period of 4 hours, the flow of aluminium chloride and ammonia was stopped and the furnace cooled down. On visual examination, the individual particles of the cubic boron nitride powder were observed to have a grey-black coating which was identified as aluminium nitride by X-ray diffraction. The coated cubic boron nitride powder was placed in a tantalum container which was placed in the reaction zone of a conventional high temperature/high pressure apparatus. The contents of the tantalum container were raised to a temperature of 1450°C and a pressure of 55 kilobars and these elevated conditions maintained for a period of 10 minutes. Recovered from the tantalum container was a cubic boron nitride abrasive compact consisting of a mass of discrete cubic boron nitride particles bonded by an aluminium nitride second phase or matrix. On examination, the aluminium nitride second phase or matrix was found to have been produced by solid sintering.

## Claims

1. A method of producing an abrasive compact including the steps of providing a mass of ultra-hard abrasive particles each of which has a coating of a refractory material selected from oxides, nitrides and carbides deposited thereon, and subjecting the mass of coated abrasive particles to conditions of temperature and pressure at which the abrasive particle is crystallographically stable to cause the coatings to solid sinter and bond the abrasive particles.

2. A method according to claim 1 wherein the coating covers the entire particle on which it is deposited.

3. A method according to claim 1 or claim 2 wherein the ultra-hard abrasive particles have a hardness at least that of cubic boron nitride.

4. A method according to any one of the preceding claims wherein the ultra-hard abrasive particles are selected from diamond and cubic boron nitride.

5. A method according to any one of the preceding claims wherein the abrasive particles have a size which does not exceed 150 microns.

6. A method according to any one of the preceding claims wherein the abrasive particles have a size in the range 10 to 60 microns.

7. A method according to any one of the preceding claims wherein the refractory material has a melting point of at least 1200°C.

8. A method according to any one of the preceding claims wherein the refractory material has a melting point of at least 1500°C.

9. A method according to any one of the preceding claims wherein the oxide is selected from aluminium, zirconium, hafnium, tantalum, niobium and titanium oxides.

10. A method according to any one of claims 1 to 8 wherein the nitride is selected from aluminium, silicon, zirconium, hafnium, tantalum, vanadium, titanium and niobium nitrides.

11. A method according to any one of claims 1 to 8 wherein the carbide is selected from silicon, zirconium, hafnium, tantalum, vanadium, titanium, chromium, niobium and tungsten carbides.

12. A method according to any one of the preceding claims wherein the ultra-hard abrasive particles are diamonds and the coating is a nitride or a carbide.

13. A method according to any one of claims 1 to 11 wherein the ultra-hard abrasive particles are cubic boron nitride particles and the coating is a nitride.

14. A method according to any one of the preceding claims wherein the coating has a thickness of less than 10 microns.

15. A method according to any one of the preceding claims wherein the coating has a thickness in the range 5 to 10 microns.

16. A method according to any one of the preceding claims wherein the refractory material is amorphous or essentially amorphous.

17. A method according to any one of the preceding claims wherein the coating comprises multiple layers, each of a different refractory material.

18. A method according to claim 17 wherein the layer adjacent the abrasive particle has a coefficient of thermal expansion closest to that of the abrasive particle.

19. A method according to any one of the preceding claims wherein the conditions of temperature and pressure applied to the coated particles are a temperature in the range 1300°C to 1700°C and the pressure 40 to 70 kilobars.
